(19) Europäisches Patentamt / European Patent Office / Office européen des brevets

(11) **EP 4 286 970 B1**

(12) **EUROPEAN PATENT SPECIFICATION**

(45) Date of publication and mention
of the grant of the patent:
**24.09.2025 Bulletin 2025/39**

(51) International Patent Classification (IPC):
**G05B 23/02** (2006.01)   **G05B 17/02** (2006.01)
**G06N 3/00** (2023.01)

(21) Application number: **22176499.6**

(52) Cooperative Patent Classification (CPC):
**G05B 23/024; G06N 20/00;** G05B 2219/25428

(22) Date of filing: **31.05.2022**

(54) **METHOD AND SYSTEM FOR DETECTING SENSOR ANOMALIES**

VERFAHREN UND SYSTEME ZUM DETEKTIEREN VON SENSORANOMALIEN

PROCÉDÉ ET SYSTÈME DE DÉTECTION D'ANOMALIES DE CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2023 Bulletin 2023/49**

(73) Proprietor: **Siemens Aktiengesellschaft
80333 München (DE)**

(72) Inventors:
• **Joblin, Mitchell
81825 München (DE)**
• **Yee, Dianna
81825 München (DE)**

(74) Representative: **Siemens Patent Attorneys
Postfach 22 16 34
80506 München (DE)**

(56) References cited:
WO-A1-2020/046261   US-A1- 2020 082 245
US-A1- 2020 379 454   US-A1- 2021 272 027

Remarks:
The file contains technical information submitted
after the application was filed and not included in this
specification

**Description**

To reliably operate complex systems such as automated factories, plants, or electrical grids, operators rely heavily on sensor readings to understand whether the system is operating correctly. The appearance of incorrect operation can result from failures in the system or failures in the sensor to report accurate values. Developing a machine learning algorithm to automatically detect undesirable operating behavior is often difficult because it is rare to obtained labelled data for this task. For this reason, algorithms for detecting undesirable operating behavior typically formulate the problem as anomaly detection. While this approach is convenient since it requires no labelled data, users typically find that the resulting algorithms frequently indicate anomalies are present even when the system is in fact behaving normally (i.e., high false positive rate).

In the state of the art, historical data from sensors are used to establish a "normal" model of system behavior. Often simple parametric models like Gaussian distributions are used. Based on historical data a mean and variance is learned. Any sensor observation deviating significantly (more than 3 standard deviations) is flagged as an anomaly.

US 2020/0082245 A1 discloses a computer implemented method for detecting sensor anomalies, with the steps of extracting input time series traces from one or more sensors, reconstructing, by a trained neural network, output time series traces, computing a difference between a first input time series trace and a corresponding first output time series trace, and detecting an anomaly if the difference exceeds a threshold.

US 2020/379454 A1 discloses a method for predictive maintenance, wherein a server receives data from sensors of equipment, and uses one or more machine learning models to assign an anomaly score based on the differences between predicted values and measured values. If the anomaly score exceeds a threshold value, the server may issue an alert.

US 2021/272027 A1 discloses a method for reconciling a forecast within a hierarchy. A pre-processing module reconstructs a structure of the hierarchy and captures a relationship between nodes of the hierarchy in a summation matrix. A forecast reconciliation matrix uses the summation matrix and a weight matrix (that reflects a weighting scheme between the nodes) and a base forecast to optimize the overall forecast error using a least squares procedure. The reconciled forecast has a zero consistency error.

US 2020/046261 A1 discloses a method for systematic prognostic analysis that constructs a graphical integrated causal model having a series of topologies. Each topology has nodes that represent stochastic variables associated with entities. For each variable, structured conditional probability tables are constructed based on a dynamic Bayesian model and corresponding conditional probability tables are attached to each variable.

It is an object of the invention to provide a method and system for detecting sensor anomalies that provide an alternative to the state of the art.

The objectives of the invention are solved by the independent claims. Further advantageous arrangements and embodiments of the invention are set forth in the respective dependent claims.

The invention is set out in the appended set of claims.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, improve the performance of sensor anomaly detection by incorporating additional domain knowledge about the structure of the system in the form of relational constraints.

The method and system, or at least some of their embodiments, reduce the prediction error for anomaly detection in problems involving material flow (lower false positive rate).

The method and system, or at least some of their embodiments, provide increased training efficiency by leveraging domain knowledge.

The method and system, or at least some of their embodiments, require less data to achieve a highly performant model.

The method and system, or at least some of their embodiments, help to guarantee that model predictions are consistent with physical laws (satisfy aggregation constraints).

The method and system, or at least some of their embodiments, increase the trustworthiness and ease of use in adopting AI-based algorithms.

The method and system, or at least some of their embodiments, reduce costs that are associated with false or missed anomalies.

In an embodiment of the method and system, the extracting operation is performed by a material flow tracking system that is processing the sensor measurements.

In an embodiment of the method and system, the machine learning processes previous sensor measurements when executing the forecasting operation.

An embodiment of the method comprises the additional operation of automatically halting at least a part of the industrial system after detecting the anomaly.

An embodiment of the method comprises the additional operation of outputting, by a user interface, an alert to an operator after detecting the anomaly.

In an embodiment of the method and system, the machine learning model has been initially trained by a Gradient-based Reconciling Propagation algorithm in order to learn trainable parameters of a projection matrix, wherein the projection matrix is used to project base forecasts to coherent forecasts in a hierarchically-coherent solution space, and wherein the coherent forecasts contain the predicted time series values.

In an embodiment of the method and system, the Gradient-based Reconciling Propagation algorithm ensures that information propagation between forecasts is restricted to nodes who are connected through an ancestral and descendant relation, by masking entities of the projection matrix by a second matrix, thereby constraining the effects of the projection matrix.

The computer program product has program instructions for carrying out the method.

The provision device for the computer program product stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,

Fig. 2    shows another embodiment,

Fig. 3    shows a tree representing material flow in an industrial system,

Fig. 4    shows a training algorithm, and

Fig. 5    shows a flowchart of a possible exemplary embodiment of a method for detecting sensor anomalies.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

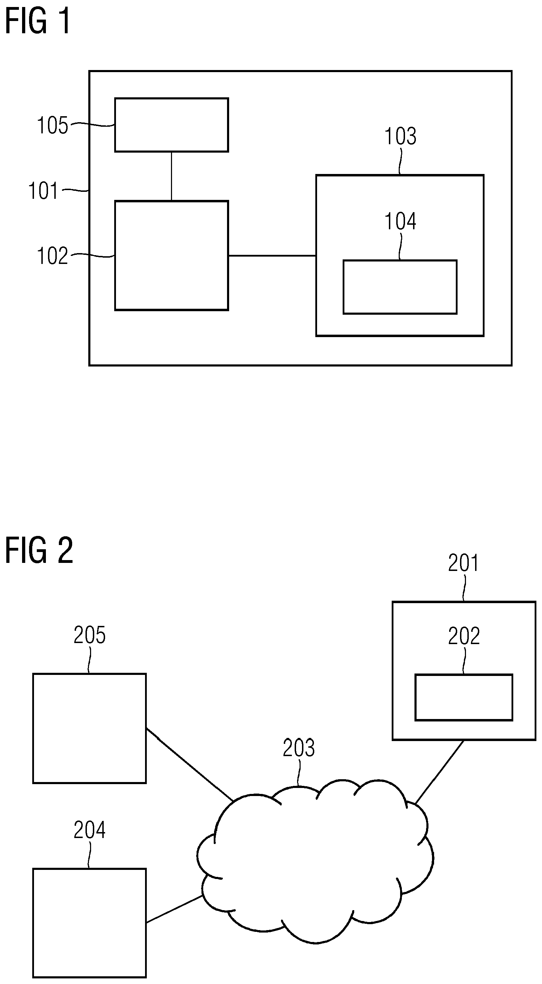

Fig. 1 shows one sample structure for computer-implementation of the invention which comprises:

(101) computer system
(102) processor
(103) memory
(104) computer program (product)
(105) user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201) provisioning device
(202) computer program (product)
(203) computer network / Internet
(204) computer system

(205) mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

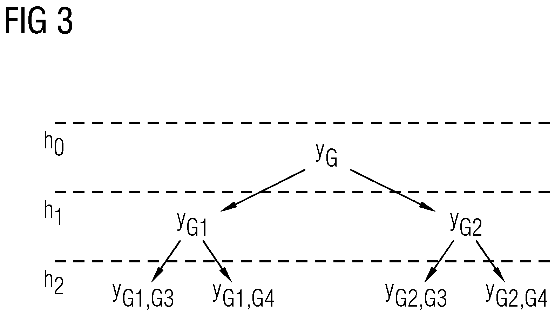

Preferably, the embodiments shown in Figs. 3 to 5 can be implemented with a structure as shown in Fig. 1 or Fig. 2.

Hierarchical time series as well as grouped time series and corresponding algorithms for forecasting are known, for example, from Hyndman, R.J., & Athanasopoulos, G. (2018):"Forecasting: principles and practice", 2nd edition, OTexts: Melbourne, Australia, chapter 10, available on the internet at https://otexts.com/fpp2/ on 31.05.2022.

The following embodiments are targeting applications where material flow is present. For example, material flows through a factory according to input to the production line to produce products that are assembled and eventually flow out of various production phases. More concretely, if four wheels flow into an automobile production phase for wheel assembly, then a car with four wheels will flow out. Similarly, in electrical circuits physical laws require that the total current flowing into a node is equal to the total current flowing out of a node. In problems involving flow, the embodiments leverage the known structure of the material flow to impose additional knowledge on an anomaly detection system and achieve improved performance.

Fig. 3 shows a tree that illustrates the material flow. Each level of the tree represents different nodes in a material flow problem. At the lowest level the nodes can represent a final phase of a production process. Material flowing to child nodes must equal material flowing through the parent nodes.

Another example would be an assembly line where weight sensors measure the weight of a first, second, third and fourth component that are entering the assembly line. The measurements of these weight sensors provide the time series values at the lowest level of the nodes in Fig. 3. The first and second component are assembled at a first manufacturing station, resulting in a first assembly, and the third and fourth component are assembled at a second manufacturing station, resulting in a second assembly. Sensors capture the weight of the first and second assembly at the respective stations and provide the time series values at the middle level of the nodes in Fig. 3. Finally, the first assembly and second assembly are combined to form a final product. Another sensor measures the weight of the final product and provides the time series value for the top node of the tree shown in Fig. 3.

As modern manufacturing systems can be very complex, other embodiments can feed raw sensor measurements into a material flow tracking system that analyzes and/or simulates material flow in the manufacturing system. Material flow tracking systems are known from the state of the art, for example from the field of material flow analysis, and are also available as readily deployable commercial products. The hierarchical times series values for the different nodes in Fig. 3 are then provided by the material flow tracking system.

At a high level, the idea is to use the structural knowledge of an industrial system (in terms of relational information) to train a machine learning model. The machine learning model is responsible for predicting what the sensor readings should be if the industrial system is working correctly. In essence, the machine learning model represents the expect normal industrial system behavior. We can then compare the expected sensor values with actual sensor values (e.g., by taking the absolute difference). A significant deviation (i.e., large residual value) indicates that the industrial system is behaving abnormally.

Hierarchical relations among time-series sensor data can be represented as a tree, a directed acyclic graph $G \in \{V, E\}$ where $V$ is the set nodes of the graph where each node is associated to a time-series. The cardinality of the set $|V| = n$ is the number of time-series to forecast. The set of edges $E \in V \times V$ represent parent-child relations where the value of the times-series at a parent node equals the sum of values of all child nodes.

Let $y_t = [y_{v_0,t}, y_{v_1,t}..., y_{v_n,t}]$ be the vector of observations of a hierarchical time series at time t where $y_{v_i}$ denotes the $i^{th}$ time-series of the hierarchical graph structure and $v_i$ is a variable whose value is the node id which uniquely identifies the node and corresponding time-series. We denote the observations of $y_t$ for all time as $y$. To indicate the difference between forecasts and actual observations, we use the hat operator to denote $\hat{y}_{v_i,t+h}$ as the estimated forecast of $y_{v_i,t+h}$ at $h$ time-steps in the future, where $1 \leq h \leq H$, and H denotes the forecast horizon.

Let $y_{B_t} \in \mathbb{R}^m$ denote a vector that contains values of all time-series which are leaf nodes at time $t$, also referred to as the bottom time-series. The vector $y_{A_t} \in \mathbb{R}^{n-m}$, contains values of all time-series that are parent nodes of the nodes in $y_{B_t}$. The aggregations of values within $y_B$ is related to $y$ by an aggregation matrix $S \in \{0,1\}^{n \times m}$ by

$$\mathbf{y}_t = \mathbf{S}\mathbf{y}_{\mathcal{B},t} \Leftrightarrow \begin{bmatrix} \mathbf{y}_{A,t} \\ \mathbf{y}_{\mathcal{B},t} \end{bmatrix} = \begin{bmatrix} \mathbf{S}_{\text{sum}} \\ \mathbf{I}_m \end{bmatrix} \mathbf{y}_{\mathcal{B},t}.$$

where $I_m$ is the m $\times$ m dimensional identity matrix and $S_{sum} \in \{0,1\}$ is the summation matrix where the values of

$i^{th}$ row of $S_{sum}$ indicate which values in $y_{B,t}$ to aggregate to define the $i^{th}$ value of $y_{A,t}$. For the hierarchical time-series example in Fig. 3, the aggregation matrix S is defined as

$$\mathbf{S} = \begin{bmatrix} 1 & 1 & 1 & 1 \\ 1 & 1 & 0 & 0 \\ 0 & 0 & 1 & 1 \\ & & \mathbf{I_4} & \end{bmatrix}.$$

For the grouped time-series setting with groupings shown in Fig. 3, where $y_A = \{y_G, y_{G1}, y_{G2}, y_{G3}, y_{G4}\}$, S is defined as

$$\mathbf{S} = \begin{bmatrix} 1 & 1 & 1 & 1 \\ 1 & 1 & 0 & 0 \\ 0 & 0 & 1 & 1 \\ 1 & 0 & 1 & 0 \\ 0 & 1 & 0 & 1 \\ & & \mathbf{I_4} & \end{bmatrix}$$

Historically, the reconciliation of forecasts is commonly addressed by applying post-processing to the base forecasts. To distinguish between the reconciled forecasts and base forecasts, we denote the base forecasts with the tilde accent where $\hat{y}_{t+h}$ is the reconciled forecasts from the base forecasts $\tilde{y}_{t+h}$. Previous work has shown that $\tilde{y}_{t+h}$ can be reconciled by the following matrix multiplications

$$\hat{\mathbf{y}}_{t+h} = \mathbf{SP}\tilde{\mathbf{y}}_{t+h}$$

where $P \in \mathbb{R}^{m \times n}$ and its values determine the propagation of the time-series through aggregations or dis-aggregations. The reconciliation transformation can be viewed as a projection matrix, where reconciliation from all levels can be applied through the matrix multiplications of the matrix, $SP \in \mathbb{R}^{n \times n}$.

The embodiment uses a Gradient-based Reconciling Propagation method which aims to learn the values of a projection matrix $P_o$, which is a matrix of trainable parameters that projects the base forecasts into a hierarchically-coherent solution space. The resulting coherent forecasts are defined as

$$\hat{\mathbf{y}}_{t+h} = \mathbf{S}(\mathbf{S}^{\top} * \mathbf{P_o})\tilde{\mathbf{y}}_{t+h},$$

where * denotes an element-wise multiplication and $\tilde{y}_{t+h}$ is a vector of n dimensions. As this equation is differentiable, it is therefore possible to use a gradient-based approach to learn the values of $P_o$ which minimizes forecast error. This approach can either be used as a post-processing step to reconcile a set of base forecasts or integrated into a neural network architecture as the output layer to yield coherent forecasts, meaning $\tilde{y}_{t+h}$ can either be a set of base forecasts or the outputs of a hidden layer of n dimensions. The element-wise multiplication of ($S^{\top} * P_o$) ensures that the information propagation between forecasts is restricted to nodes who are connected through an ancestral and descendant relation.

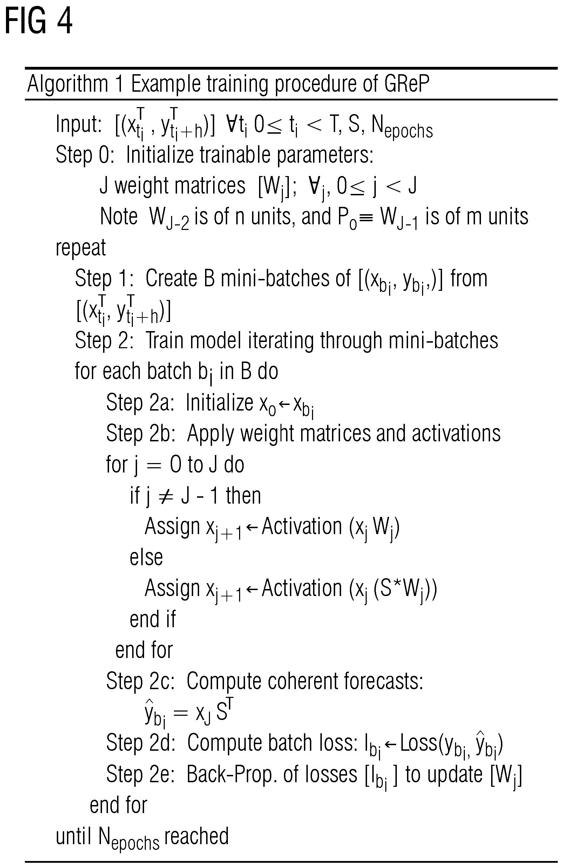

The training algorithm depicted in Fig. 4 shows an example procedure for training the machine learning model by learning the parameters of $P_o$. In the case where the embodiment is used as a post-processing step, the input features $x_{t_i}$ to provide to the algorithm would be the base-forecasts $\hat{y}_{t+h}$. The currently described embodiment differs from previous approaches since the embodiment can be designed to be nonlinear. In the case where one would want to use the embodiment for end-to-end training, $x_{t_i}$ would be the input features for the forecasting task such as auto-regressive and exogenous features.

The machine learning model is trained on historical sensor data to learn the normal behavior of the industrial system by means of a forecasting task. The training data can be obtained by recording sensor values which are known to be anomaly free. A second option is to utilize historical data that may contain anomalies, but the anomaly frequency must be low (e.g., less than 1%).

Once the machine learning model has been trained, sensor data can be fed to the machine learning model to produce a prediction about what normal sensor readings should look like. By subtracting the observed sensor readings from the predicted sensor readings, a residual value is computed. A large residual value indicates that the industrial system is operating in an anomalous state.

If the algorithm depicted in Fig. 4 predicts that an anomaly is likely present, then it can be used to either notify a human operator or be fed directly into a control system (closed loop control). In the close loop control setting, an anomaly may trigger the industrial system to halt in order to prevent material losses due to incorrect operation.

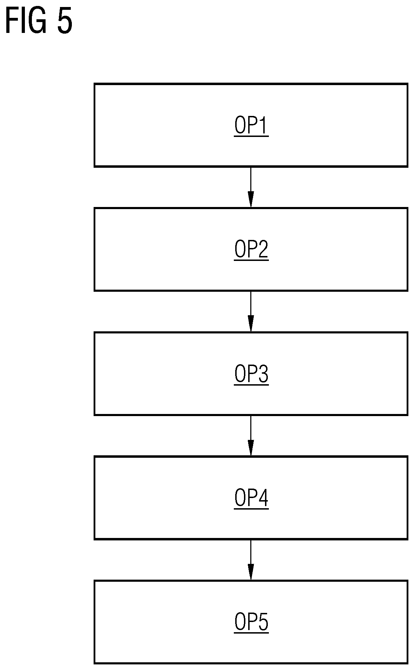

Fig. 5 shows a flowchart of a possible exemplary embodiment of a method for detecting sensor anomalies.

In a forecasting operation OP1, a machine learning model, wherein the machine learning model models a material flow in an industrial system, in particular in a production line, as a hierarchical time series, wherein the hierarchical time series represents a structure of the material flow using a directed acyclic graph with a set of nodes and a set of edges, wherein each node is associated to a time series, and wherein the edges represent parent-child relations where each value of a time series at a parent node equals the sum of the respective values of its child nodes, predicts time series values for all nodes.

In a receiving operation OP2, current sensor measurements from sensors placed in the industrial system are received.

In an extracting operation OP3, observed time series values for at least some or all of the nodes are extracted from the current sensor measurements.

In a computing operation OP4, a difference between the predicted time series values and the observed time series values is computed.

In a detecting operation OP5, an anomaly is detected if the difference exceeds a threshold.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

**Claims**

1. A computer implemented method for detecting sensor anomalies, comprising the following operations, wherein the operations are performed by components, and wherein the components are software components executed by one or more processors and/or hardware components:

   - forecasting (OP1), by a machine learning model, predicted time series values,
   - receiving (OP2) current sensor measurements from sensors placed in an industrial system,
   - extracting (OP3) observed time series values from the current sensor measurements,
   - computing (OP4) a difference between the predicted time series values and the observed time series values, and
   - detecting (OP5) an anomaly if the difference exceeds a threshold,

   **characterized in that**

   - the machine learning model models a material flow in the industrial system, in particular in a production line, as a hierarchical time series, wherein the hierarchical time series represents a structure of the material flow using a directed acyclic graph with a set of nodes and a set of edges, wherein each node is associated to a time series, and wherein the edges represent parent-child relations where each value of a time series at a parent node equals the sum of the respective values of its child nodes,
   - the forecasting operation (OP1) forecasts the predicted time series values for all nodes, and
   - the extracting operation (OP3) extracts the observed time series values for at least some or all of the nodes.

2. The method according to claim 1,

   - wherein the extracting operation (OP3) is performed by a material flow tracking system that is processing the sensor measurements.

3. The method according to claim 1 or 2,

   - wherein the machine learning model processes previous sensor measurements when executing the forecasting operation (OP1).

4. The method according to any of the preceding claims,

   - with the additional operation of automatically halting at least a part of the industrial system after detecting the anomaly.

5. The method according to any of the preceding claims,

   - with the additional operation of outputting, by a user interface, an alert to an operator after detecting the anomaly.

6. The method according to any of the preceding claims,

   - wherein the machine learning model has been initially trained by a Gradient-based Reconciling Propagation algorithm in order to learn trainable parameters of a projection matrix, wherein the projection matrix is used to project base forecasts to coherent forecasts in a hierarchically-coherent solution space, and wherein the coherent forecasts contain the predicted time series values.

7. The method according to claim 6,

   - wherein the Gradient-based Reconciling Propagation algorithm ensures that information propagation between forecasts is restricted to nodes who are connected through an ancestral and descendant relation, by masking entities of the projection matrix by a second matrix, thereby constraining the effects of the projection matrix.

8. A system for detecting sensor anomalies, comprising:

   - a machine learning model,
   wherein the machine learning model has been trained for forecasting (OP1) predicted time series values,
   - an interface, configured for receiving (OP2) current sensor measurements from sensors placed in an industrial system, and
   - one or more processors, configured for

      - extracting (OP3) observed time series values from the current sensor measurements,
      - computing (OP4) a difference between the predicted time series values and the observed time series values, and
      - detecting (OP5) an anomaly if the difference exceeds a threshold,

   **characterized in that**
   - the machine learning model models a material flow in the industrial system, in particular in a production line, as a hierarchical time series, wherein the hierarchical time series represents a structure of the material flow using a directed acyclic graph with a set of nodes and a set of edges, wherein each node is associated to a time series, and wherein the edges represent parent-child relations where each value of a time series at a parent node equals the sum of the respective values of its child nodes,
   - the machine learning model has been trained for forecasting (OP1) the predicted time series values for all nodes, and
   - the one or more processors are configured for extracting (OP3) the observed time series values for at least some or all of the nodes.

9. Computer program product with program instructions for carrying out a method according to one of the method claims 1 to 7.

10. Provision device for the computer program product according to the preceding claim, wherein the provision device stores and/or provides the computer program product.

**Patentansprüche**

1. Computerimplementiertes Verfahren zum Detektieren von Sensoranomalien, umfassend die folgenden Vorgänge, wobei die Vorgänge von Komponenten durchgeführt werden und wobei die Komponenten Softwarekomponenten, die von einem oder mehreren Prozessoren ausgeführt werden, und/oder Hardwarekomponenten sind:

   - Prognostizieren (OP1) vorhergesagter Zeitreihenwerte durch ein Maschinenlernmodell,
   - Empfangen (OP2) von aktuellen Sensormessungen von in einem industriellen System platzierten Sensoren,
   - Extrahieren (OP3) von beobachteten Zeitreihenwerten aus den aktuellen Sensormessungen,
   - Berechnen (OP4) einer Differenz zwischen den vorhergesagten Zeitreihenwerten und den beobachteten Zeitreihenwerten und
   - Detektieren (OP5) einer Anomalie, wenn die Differenz einen Schwellenwert überschreitet,
   **dadurch gekennzeichnet, dass**
   - das Maschinenlernmodell einen Materialfluss in dem industriellen System, insbesondere in einer Produktionslinie, als eine hierarchische Zeitreihe modelliert, wobei die hierarchische Zeitreihe eine Struktur des Materialflusses unter Verwendung eines gerichteten azyklischen Graphen mit einem Satz von Knoten und einem Satz von Kanten darstellt, wobei jeder Knoten einer Zeitreihe zugeordnet ist und wobei die Kanten Eltern-Kind-Beziehungen darstellen, wobei jeder Wert einer Zeitreihe an einem Elternknoten gleich der Summe der jeweiligen Werte seiner Kindknoten ist,
   - der Prognostiziervorgang (OP1) die vorhergesagten Zeitreihenwerte für alle Knoten prognostiziert und
   - der Extrahiervorgang (OP3) die beobachteten Zeitreihenwerte für mindestens einige oder alle Knoten extrahiert.

2. Verfahren nach Anspruch 1,

   - wobei der Extrahiervorgang (OP3) von einem Materialflussverfolgungssystem durchgeführt wird, das die Sensormessungen verarbeitet.

**3.** Verfahren nach Anspruch 1 oder 2,

- wobei das Maschinenlernmodell beim Ausführen des Prognostiziervorgangs (OP1) frühere Sensormessungen verarbeitet.

**4.** Verfahren nach einem der vorstehenden Ansprüche,

- mit dem zusätzlichen Vorgang, mindestens einen Teil des industriellen Systems nach dem Detektieren der Anomalie automatisch anzuhalten.

**5.** Verfahren nach einem der vorstehenden Ansprüche,

- mit dem zusätzlichen Vorgang, nach dem Detektieren der Anomalie eine Warnung an einen Bediener über eine Benutzerschnittstelle auszugeben.

**6.** Verfahren nach einem der vorstehenden Ansprüche,

- wobei das Maschinenlernmodell anfänglich durch einen gradientenbasierten Abstimmungspropagierungsalgorithmus trainiert wurde, um trainierbare Parameter einer Projektionsmatrix zu lernen, wobei die Projektionsmatrix zum Projizieren von Basisprognosen auf kohärente Prognosen in einem hierarchisch kohärenten Lösungsraum verwendet wird und wobei die kohärenten Prognosen die vorhergesagten Zeitreihenwerte enthalten.

**7.** Verfahren nach Anspruch 6,

- wobei der gradientenbasierte Abstimmungspropagierungsalgorithmus durch Maskieren von Entitäten der Projektionsmatrix durch eine zweite Matrix sicherstellt, dass die Informationspropagierung zwischen Prognosen auf Knoten beschränkt ist, die durch eine Vorfahren- und Nachfahrenbeziehung verbunden sind, wodurch die Auswirkungen der Projektionsmatrix eingeschränkt werden.

**8.** System zum Detektieren von Sensoranomalien, umfassend:

- ein Maschinenlernmodell;
wobei das Maschinenlernmodell zum Prognostizieren (OP1) vorhergesagter Zeitreihenwerte trainiert ist,
- eine Schnittstelle, die zum Empfangen (OP2) von aktuellen Sensormessungen von in einem industriellen System platzierten Sensoren konfiguriert ist, und
- einen oder mehrere Prozessoren, die zu Folgendem konfiguriert sind

- Extrahieren (OP3) von beobachteten Zeitreihenwerten aus den aktuellen Sensormessungen,
- Berechnen (OP4) einer Differenz zwischen den vorhergesagten Zeitreihenwerten und den beobachteten Zeitreihenwerten und
- Detektieren (OP5) einer Anomalie, wenn die Differenz einen Schwellenwert überschreitet,

**dadurch gekennzeichnet, dass**
- das Maschinenlernmodell einen Materialfluss in dem industriellen System, insbesondere in einer Produktionslinie, als eine hierarchische Zeitreihe modelliert, wobei die hierarchische Zeitreihe eine Struktur des Materialflusses unter Verwendung eines gerichteten azyklischen Graphen mit einem Satz von Knoten und einem Satz von Kanten darstellt, wobei jeder Knoten einer Zeitreihe zugeordnet ist und wobei die Kanten Eltern-Kind-Beziehungen darstellen, wobei jeder Wert einer Zeitreihe an einem Elternknoten gleich der Summe der jeweiligen Werte seiner Kindknoten ist,
- das Maschinenlernmodell zum Prognostizieren (OP1) der vorhergesagten Zeitreihenwerte für alle Knoten trainiert ist und
- der eine oder die mehreren Prozessoren zum Extrahieren (OP3) der beobachteten Zeitreihenwerte für mindestens einige oder alle Knoten konfiguriert sind.

**9.** Computerprogrammprodukt mit Programmanweisungen zum Durchführen eines Verfahrens nach einem der Ansprüche 1 bis 7.

**10.** Bereitstellungsvorrichtung für das Computerprogrammprodukt nach dem vorstehenden Anspruch, wobei die Bereitstellungsvorrichtung das Computerprogrammprodukt speichert und/oder bereitstellt.

**Revendications**

**1.** Procédé mis en œuvre par ordinateur de détection d'anomalies de capteur, comprenant les opérations suivantes, dans lequel les opérations sont effectuées par des composants, et dans lequel les composants sont des composants logiciels exécutés par un ou plusieurs processeurs et/ou des composants matériels :

- la prévision (OP1), par un modèle d'apprentissage automatique, de valeurs de séries chronologiques prédites,
- la réception (OP2) de mesures de capteur actuelles provenant de capteurs placés dans un système industriel,
- l'extraction (OP3) de valeurs de séries chronologiques observées à partir des mesures de capteur actuelles,
- le calcul (OP4) d'une différence entre les valeurs de séries chronologiques prédites et les valeurs de séries chronologiques observées, et
- la détection (OP5) d'une anomalie si la différence dépasse un seuil,
**caractérisé en ce que**
- le modèle d'apprentissage automatique modélise un flux de matériaux dans le système industriel, en particulier dans une ligne de production, sous la forme d'une série chronologique hiérarchique, dans lequel la série chronologique hiérarchique représente une structure du flux de matériaux à l'aide d'un graphe acyclique orienté avec un ensemble de nœuds et un ensemble d'arêtes, dans lequel chaque nœud est associé à une série chronologique, et dans lequel les arêtes représentent des relations parent-enfant où chaque valeur d'une série chronologique à un nœud parent est égale à la somme des valeurs respectives de ses nœuds enfants,
- l'opération de prévision (OP1) prévoit les valeurs de séries chronologiques prédites pour tous les nœuds, et
- l'opération d'extraction (OP3) extrait les valeurs de séries chronologiques observées pour au moins certains ou tous les nœuds.

**2.** Procédé selon la revendication 1,

- dans lequel l'opération d'extraction (OP3) est effectuée par un système de suivi de flux de matériaux qui traite les mesures de capteur.

**3.** Procédé selon la revendication 1 ou 2,

- dans lequel le modèle d'apprentissage automatique traite les mesures de capteur précédentes lors de l'exécution de l'opération de prévision (OP1).

**4.** Procédé selon l'une quelconque des revendications précédentes,

- avec l'opération supplémentaire d'arrêt automatique d'au moins une partie du système industriel après détection de l'anomalie.

**5.** Procédé selon l'une quelconque des revendications précédentes,

- avec l'opération supplémentaire de production, par une interface utilisateur, d'une alerte à un opérateur après détection de l'anomalie.

**6.** Procédé selon l'une quelconque des revendications précédentes,

- dans lequel le modèle d'apprentissage automatique a été initialement formé par un algorithme de propagation de réconciliation basé sur un gradient afin d'apprendre des paramètres pouvant être entraînés d'une matrice de projection, dans lequel la matrice de projection est utilisée pour projeter des prévisions de base sur des prévisions cohérentes dans un espace de solution hiérarchiquement cohérent, et dans lequel les prévisions cohérentes contiennent les valeurs de séries chronologiques prédites.

**7.** Procédé selon la revendication 6,

- dans lequel l'algorithme de propagation de réconciliation basé sur le gradient garantit que la propagation d'informations entre les prévisions est limitée aux nœuds qui sont connectés par une relation ancestrale et descendante, en masquant les entités de la matrice de projection par une deuxième matrice, limitant ainsi les effets de la matrice de projection.

**8.** Système de détection d'anomalies de capteur, comprenant :

- un modèle d'apprentissage automatique, dans lequel le modèle d'apprentissage automatique a été entraîné pour prévoir (OP1) des valeurs de séries chronologiques prédites,
- une interface, configurée pour recevoir (OP2) des mesures de capteur actuelles provenant de capteurs placés dans un système industriel, et
- un ou plusieurs processeurs, configurés pour
- extraire (OP3) des valeurs de séries chronologiques observées à partir des mesures de capteur actuelles,
- calculer (OP4) une différence entre les valeurs de séries chronologiques prédites et les valeurs de séries chronologiques observées, et
- détecter (OP5) une anomalie si la différence dépasse un seuil, **caractérisé en ce que**
- le modèle d'apprentissage automatique modélise un flux de matériaux dans le système industriel, en particulier dans une ligne de production, sous la forme d'une série chronologique hiérarchique, dans lequel la série chronologique hiérarchique représente une structure du flux de matériaux à l'aide d'un graphe acyclique orienté avec un ensemble de nœuds et un ensemble d'arêtes, dans lequel chaque nœud est associé à une série chronologique, et dans lequel les arêtes représentent des relations parent-enfant où chaque valeur d'une série chronologique à un nœud parent est égale à la somme des valeurs respectives de ses nœuds enfants,

- le modèle d'apprentissage automatique a été formé pour prévoir (OP1) les valeurs de séries chronologiques prédites pour tous les nœuds, et

- les un ou plusieurs processeurs sont configurés pour extraire (OP3) les valeurs de séries chronologiques observées pour au moins certains ou tous les nœuds.

9. Produit de programme informatique avec des instructions de programme pour mettre en œuvre un procédé selon l'une des revendications de procédé 1 à 7.

10. Dispositif de mise à disposition du produit de programme informatique selon la revendication précédente, dans lequel le dispositif de mise à disposition stocke et/ou fournit le produit de programme informatique.

# FIG 1

# FIG 2

# FIG 3

$h_0$

$y_G$

$h_1$

$y_{G1}$            $y_{G2}$

$h_2$    $y_{G1,G3}$    $y_{G1,G4}$       $y_{G2,G3}$    $y_{G2,G4}$

# FIG 4

---

Algorithm 1 Example training procedure of GReP

---

Input: $[(x_{t_i}^T, y_{t_i+h}^T)]$ $\forall t_i$ $0 \le t_i < T$, S, $N_{epochs}$

Step 0: Initialize trainable parameters:

$\quad$ J weight matrices $[W_j]$; $\forall j$, $0 \le j < J$

$\quad$ Note $W_{J-2}$ is of n units, and $P_0 \equiv W_{J-1}$ is of m units

repeat

$\quad$ Step 1: Create B mini-batches of $[(x_{b_i}, y_{b_i})]$ from $[(x_{t_i}^T, y_{t_i+h}^T)]$

$\quad$ Step 2: Train model iterating through mini-batches

$\quad$ for each batch $b_i$ in B do

$\quad\quad$ Step 2a: Initialize $x_0 \leftarrow x_{b_i}$

$\quad\quad$ Step 2b: Apply weight matrices and activations

$\quad\quad$ for j = 0 to J do

$\quad\quad\quad$ if j $\ne$ J - 1 then

$\quad\quad\quad\quad$ Assign $x_{j+1} \leftarrow$ Activation $(x_j W_j)$

$\quad\quad\quad$ else

$\quad\quad\quad\quad$ Assign $x_{j+1} \leftarrow$ Activation $(x_j (S*W_j))$

$\quad\quad\quad$ end if

$\quad\quad$ end for

$\quad\quad$ Step 2c: Compute coherent forecasts:

$\quad\quad\quad$ $\hat{y}_{b_i} = x_J S^T$

$\quad\quad$ Step 2d: Compute batch loss: $l_{b_i} \leftarrow$ Loss$(y_{b_i}, \hat{y}_{b_i})$

$\quad\quad$ Step 2e: Back-Prop. of losses $[l_{b_i}]$ to update $[W_j]$

$\quad$ end for

until $N_{epochs}$ reached

---

FIG 5

```
┌─────────────────────┐
│         OP1         │
└─────────────────────┘
           │
           ▼
┌─────────────────────┐
│         OP2         │
└─────────────────────┘
           │
           ▼
┌─────────────────────┐
│         OP3         │
└─────────────────────┘
           │
           ▼
┌─────────────────────┐
│         OP4         │
└─────────────────────┘
           │
           ▼
┌─────────────────────┐
│         OP5         │
└─────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200082245 A1
- US 2020379454 A1
- US 2021272027 A1
- US 2020046261 A1

**Non-patent literature cited in the description**

- Forecasting: principles and practice. **HYNDMAN, R.J** ; **ATHANASOPOULOS, G**. OTexts: Melbourne. 2018